# EUROPEAN PATENT SPECIFICATION

(11) **EP 0 483 142 B1**
(45) Date of publication and mention of the grant of the patent: **23.08.1995**
(21) Application number: 89912493.7
(22) Date of filing: 13.11.1989
(51) Int. Cl.: F16H 21/32, F02B 41/04

(54) **FOUR DEAD CENTERS CRANK MECHANISM**
KURBELMECHANISMUS MIT VIER TOTPUNKTEN
MECANISME A BIELLE ET MANIVELLE AVEC QUATRE POINTS MORTS

(30) Priority: 16.11.1988 IT 6482188
(43) Date of publication of application: 06.05.1992
(73) Proprietor: SARNO, Cosimo, I-84062 Olevano sul Tusciano (IT)
(72) Inventor: SARNO, Cosimo, I-84062 Olevano sul Tusciano (IT)
(74) Representative: Fiammenghi-Domenighetti, Delfina
(86) International application number: PCT/IT89/00075
(87) International publication number: WO 90/05862

(56) References cited:
- DE-C- 440 465
- GB-A- 272 660
- GB-A- 522 792
- US-A- 1 874 194

## Description

The present invention relates to a crank mechanism for the transformation of a rotary movement of a crank into reciprocating movement of a piston.

In the prior Art, the document GB-A-272 660 discloses a device for converting reciprocating motion into rotary motion and vice versa, in which by employing a special arrangement, during application of power to the reciprocating member in one direction, the crank pin is rotated through more than 180°, and, conversely, the reciprocating member is moved from one end of its working stroke to the other, by the application of power to the crank pin, through more than 180° of its angular movement.

In this device a bell crank lever is employed.

United States Patent No. 1,874,194 discloses an internal combustion engine in which the total revolution of the crankshaft completes the four cycles: power stroke, exhaust stroke, charging stroke, compression stroke.

A great economy of fuel is obtained by the fact that the room inside the cylinder is completely emptied from residues of combustion, obtaining thus fresh gas for the power stroke.

The following invention wants to propose a new type of crank mechanism and a variant of it, in order to improve thermodynamic efficiency and to reduce quantity of polluting masses for every cycle and to attenuate the closing forces between the piston and the cylinder wall.

These aims will be pursued operating by means of the particular kinematism on the law that regulates the motion of the piston in function of crank angle.

Two embodiments of the invention will be shown in the following drawings:
Fig. 1 shows a schematic representation of the crank mechanism proposed;
Fig. 2 shows the positions and the characteristic angles coinciding with the four dead centers;
Figs. 3, 4, 5, 6 respectively represent the rods positioned at the four dead centers;
Figs. 7 and 8 represent two not schematic views of the single crank mechanism;

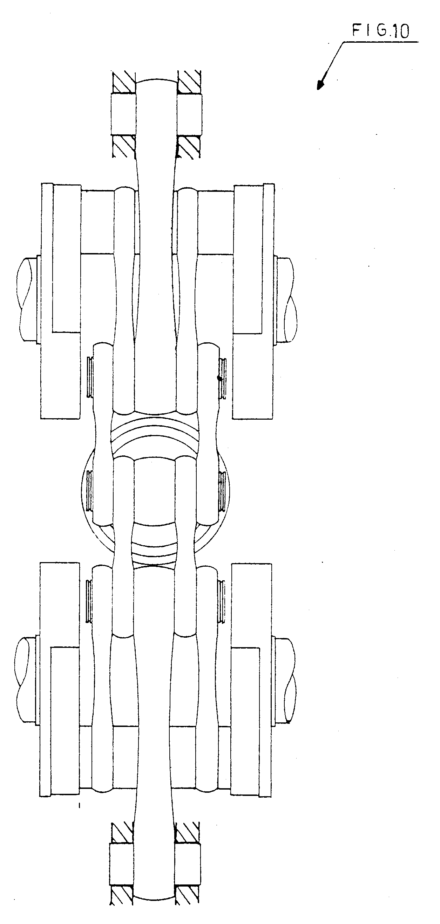

Fig. 9 and Fig. 10 represent two not schematic views of the twin crank mechanism.

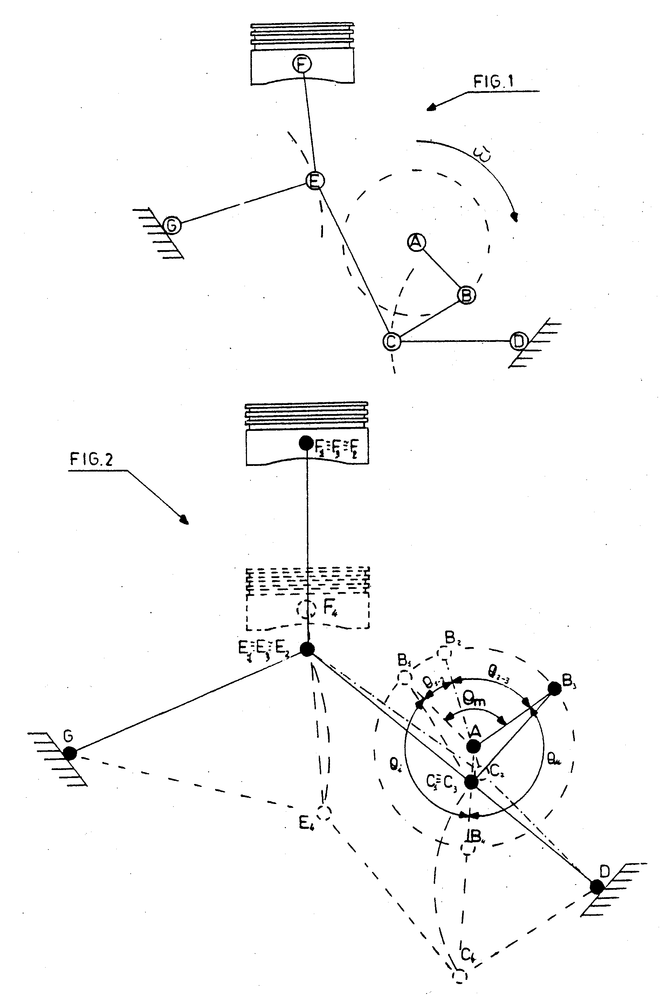

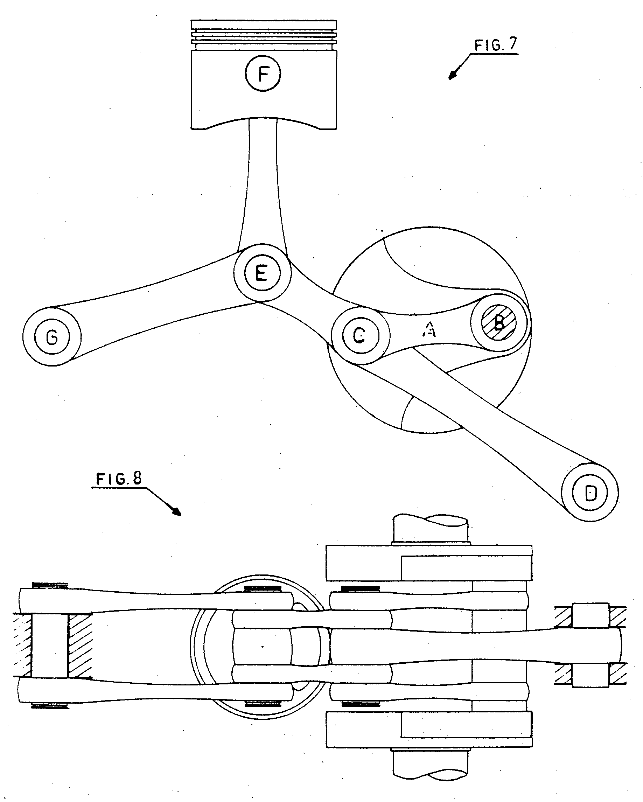

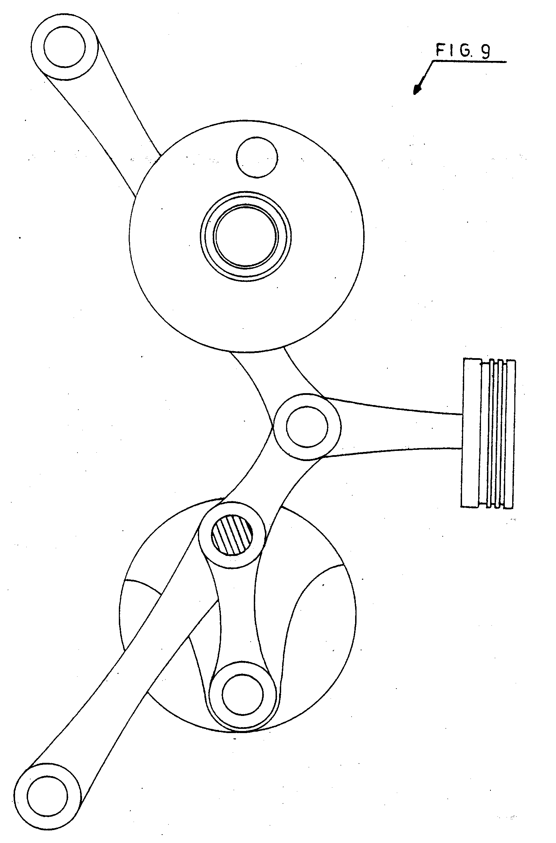

The considered crank mechanism of the present invention is formed, in its schematic description (Tab. 1/5, Fig. 1) and in its real one (Tab. 3/5, Fig. 7 and 8) by a traditional crank mechanism (rods A-B and B-C) in which the connecting rod small end (point C) is connected to two rods (rods C-D and E-C) ; one of them has an extremity in agreement with the crankcase (point D), the other one is connected by means of the extremity E to the other two rods (rods G-E and E-F); these last rods have in this way, an extremity coinciding with the point E and the other two extremities are respectively connected to the crankcase (point G) and to the piston pin (point F).

### Kinematic analysis

The title of this invention points out that this crank mechanism has the characteristic of having four dead centres, if as dead centres we intend the positions of the rods (namely when there are particular alignments of the rods) in which the piston has null velocity.

In this way, we will be at a dead centre position when there is the alignment of the rods of the traditional crank mechanism (rods A-B and B-C) or when the rods C-D and E-C are aligned.

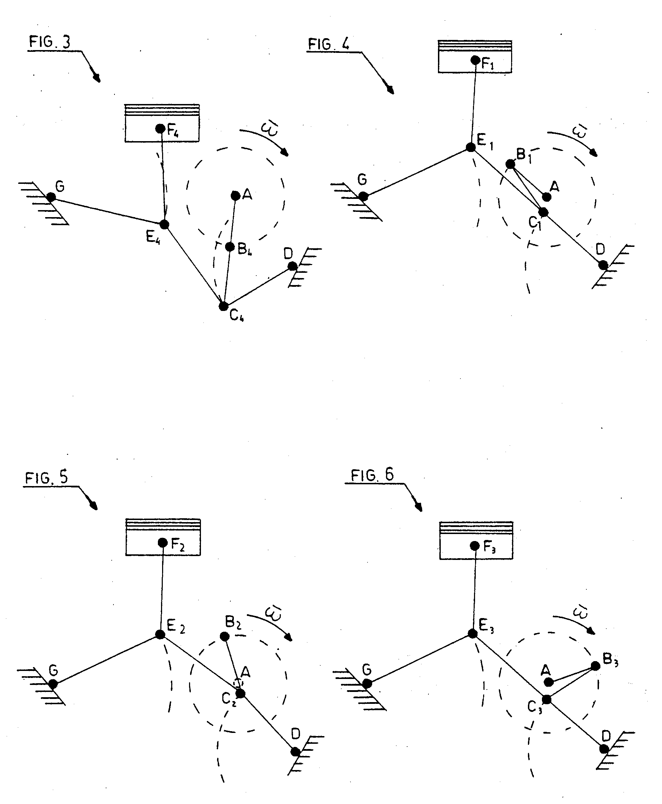

These situations are represented on the Tab. 2/5, Fig. 3, 4, 5 and 6, which show respectively the external dead centre and the three internal dead centres. Two of these last internal dead centres correspond to an end stroke position (Fig. 4 and 6), the other internal dead centre corresponds to a position of the piston too much near the end stroke position (Fig. 5). In other words, from the external dead centre the piston begins its upward run which has a catch when there is an alignment of the rods C₁-D and E₁-C₁ (Tab. 2/5, Fig. 4).

Then the piston reverses its run moving away only a little from the position occupied in precedence and that corresponds with the dead centre which is own of the component crank mechanism (Tab. 2/5, Fig. 5), and then the piston goes up again and reaches the third dead centre which corresponds to the alignment of the rods C₃-D and E₃-C₃ (Tab. 2/5, Fig. 6); the turn crank completes itself with the outside ram travel, carrying back the piston to the external dead centre.

Summing up, the outside stroke (induction and expansion stroke) is subtended by the angle ϑᵤ, the inside stroke (compression and exhaust stroke) is subtended by the angle ϑᵢ, and the angle ϑₘ subtends the catch of the piston in the neighbourhood of internal dead centre (Tab. 1/5, Fig. 2); namely between the first and the third internal dead centre, the piston moves itself with so small velocities and shiftings (a few hundredth of millimetre for an angle ϑₘ of 60 degrees and a run of 70 millimetres) that we can consider it as in a stopped position.

### Thermodynamic analysis

In order that the proposed crank mechanism had an efficient thermodynamic, it is indispensable that the rules which regulate the piston motion have to give to the evolving fluid some characteristics more near the ideal criteria; in other works, the cycle which has to come out must be, as regards the traditional one (with the same turn velocity ω̅), more similar to the limit cycle which, as well known, is composed of isometric combustions and of compressions and expansions without heat-exchanges. This isometric combustion is achieved because the piston is practically stopped during the alternation of the three internal dead centres. We have smaller quantities of heat which are exchanged between evolving fluid and cylinder walls because these last ones are set free from the piston for a smaller period of time (proportional to the angle ϑᵢ and ϑᵤ) than the traditional crank mechanism (with the same turn velocities ω̅).

As regards the intake and exhaust strokes, we can declare that during the inside stroke the losses of load are attenuated because we have the possibility of utilizing a part of the angle ϑₘ for letting opened the inlet valve, in this way, on requesting of engine-fluid this valve is just almost completely opened.

We can divide exhaust stroke in three parts (one more than traditional ones): spontaneous exhaust, forced exhaust, and, utilizing again a part of the angle ϑₘ, another spontaneous exhaust obtained delaying the closing of the exhaust valve.

### Ecological factors

This crank mechanism is very interesting also as regards the ecological point of view because it allows a more complete combustion, a reduction of combustible and lubrificating oil consumptions; these last ones are due to the minor friction between piston and cylinder wall.

### Forces of inertia

The complexity of this crank mechanism determines an increase of the forces of inertia which obblige us at a low number of revolutions. To surmount disadvantages, when besides a good efficiency we want also high powers, we must prefer the variant of this new crank mechanism represented by two views on Tab. 4/5 and 5/5, in which the inertial forces discharge themself on two crankshafts rotating in opposite way and in which there are not closing forces of the kinematic couple cylinder-piston.

This crank mechanism, in its schematic representation, is composed of the crank mechanism shown in the Tab. 1/5, Fig. 1 in which it has been eliminated the rod G-E, and the rod E-F is one block with the piston; all the system is symmetric in respect of the axis of the cylinder.

## Claims

1. A crank mechanism for the transformation of a rotary movement of a crank supported in a crankcase into reciprocating movement of a piston in a cylinder, including an open kinematic chain composed of three rods (DC, CE, EG), the extremities (D, G) of said chain being respectively anchored by a hinge to said crankcase, the mechanism being completed by the addition of a piston and a conventional crank mechanism such that said piston (F) is connected to one (E) of the intermediate hinges (E, C) by a rod (EF) and said conventional crank pin (B) is connected to the other intermediate hinge (C) by a rod (BC).

2. A crank mechanism, for the transformation of a rotary movement of a pair of cranks supported in a crankcase into reciprocating movement of a piston in a cylinder, including an open kinematic chain composed of four rods, the extremities of said chain being respectively anchored by a hinge to said crankcase, the mechanism being completed by the addition of a piston and two conventional crank mechanisms such that said piston is connected to the central hinge of three intermediate hinges in said chain and the two conventional crank pins are respectively linked to the two remaining intermediate hinges by a rod, said mechanism being symmetric with respect to the cylinder axis which is perpendicular to the straight line that joins the anchoring points of the mechanical chain.

3. A crank mechanism according to claim 1 or 2 in which some of the rods connecting two hinges are separated and disposed on either side of a plane perpendicular to the axis of each hinge.

## Patentansprüche

1. Kurbelmechanismus für die Verwandlung einer Rotationsbewegung eines Kurbelsystems der in einem Kurbelgehäuse enthalten ist, in einer Hin-und Herbewegung eines in einem Zylinder enthaltenen Kolbens, bestehend aus einer offenen kinematischen Gelenkkette die drei Stangen (DC, CE, EG) aufweist, wobei die Enden (D, G) dieser Kette mittels eines Scharniers zu diesem Gehäuse verbunden sind, wobei ferner der Mechanismus durch Hinzunahme eines Kolbens und eines herkömmlichen Kurbelmechanismus ergänzt wird, so daß der genannte Kolben (F] mit einem (E) der mittleren Scharniere (E, C) mittels einer Stange (EF) verbunden ist, während der genannte herkömmliche Gelenkzapfen (B) mit dem anderen mittleren Scharnier (C) durch eine Stange (BC) verbunden ist.

2. Kurbelmechanismus für die Verwandlung einer Rotationsbewegung eines in einem Kurbelgehäuse enthaltenen Kurbelpaares in einer Hin-und Herbewegung eines in einem Zylinder enthaltenem Kolbens, bestehend aus einer offenen kinematischen Kette die vier Stangen aufweist, wobei die Enden dieser Kette mittels eines Scharniers jeweils zu dem genannten Gehäuse verbunden sind, und das Mechanismus durch Hinzunahme eines Kolbens und von zwei herkömmlichen Kurbelmechanismen ergänzt wird, derart daß dieser Kolben mit dem mittleren Scharnier der drei mittleren Scharniere der Kette verbunden ist, während die zwei herkömmlichen Gelenkzapfen jeweils durch eine Stange mit den übrigen mittleren Scharniere verbunden ist, wobei der genannte Mechanismus bezüglich der Zylinderachse symmetrisch ist, welche Achse senkrecht liegt zur geradlinigen Strecke die die Anlenk - bzw. Stützpunkte der kinematischen Kette miteinander verbindet.

3. Kurbelmechanismus nach Anspruch 1 oder 2, in welchem einige unter den Stangen die zwei Scharniere miteinander verbinden, voneinander getrennt sind, und auf beiden Seiten der Ebene liegen die senkrecht zu jedem Scharnier angeordnet ist.

## Revendications

1. Mécanisme à manivelle pour la transformation d'un mouvement rotatif d'une manivelle supportée dans une boîte en un mouvement va-et-vient d'un piston dans un cylindre, comprenant une chaîne cinématique ouverte composée de trois bielles (DE, CE, EG), les extrémités (D, G) de ladite chaîne étant respectivement ancrées à la boîte par une charnière, le mécanisme étant complété par l'addition d'un piston et d'un mécanisme à manivelle classique de façon que ledit piston (F) est relié à une (E) des charnières intermédiaires (E, C) par une bielle (EF) et que ledit tourillon de manivelle classique (B) est relié à l'autre charnière intermédiaire (C) par une bielle (BC).

2. Mécanisme à manivelle pour la transformation d'un mouvement rotatif d'un couple de manivelles supportées dans une boîte en un mouvement va-et-vient d'un piston dans un cylindre, comprenant une chaîne cinématique ouverte composée de quatre bielles, les extrémités de ladite chaîne étant respectivement ancrées à ladite boîte par une charnière, le mécanisme étant complété par l'addition d'un piston et de deux mécanismes à manivelles classiques de façon que ledit piston est relié à la charnière centrale des trois charnières intermédiaires dans ladite chaîne et que les deux tourillons de manivelles classiques sont respectivement reliés aux deux pivots intermédiaires restantes par une bielle, ledit mécanisme étant symétrique par rapport à l'axe du cylindre qui est perpendiculaire à la ligne droite qui unit les points d'ancrage de la chaîne cinématique.

3. Mécanisme à manivelle selon la Revendication 1 ou 2 charactérisé en ce que quelques-unes des bielles qui relient deux charnières sont séparées et disposées sur les deux côtés d'un plan perpendiculaire à l'axe de chaque charnière.
